# EUROPEAN PATENT SPECIFICATION

(11) **EP 1 771 333 B1**
(45) Date of publication and mention of the grant of the patent: **23.04.2008**
(21) Application number: 05755515.3
(22) Date of filing: 30.06.2005
(51) Int. Cl.: B65B 1/36, B65B 29/02, G01F 11/02

(54) **DOSING DEVICE FOR FEEDING AN INFUSION PRODUCT**
DOSIERVORRICHTUNG ZUR ZUFÜHRUNG VON AUFGUSSMATERIAL WIE TEE ODER KAFFE
DISPOSITIF DE DOSAGE POUR L'ALIMENTATION EN PRODUIT À INFUSER

(30) Priority: 21.07.2004 IT BO20040450
(43) Date of publication of application: 11.04.2007
(73) Proprietor: IMA FLAVOUR S.r.l., 40064 Ozzano dell'Emilia (BO) (IT)
(72) Inventor: REA, Dario, I-40050 Monterenzio (Bologna) (IT); CASTELLARI, Pierluigi, I-40024 Castel San Pietro Terme (Bologna (IT)
(74) Representative: Lanzoni, Luciano
(86) International application number: PCT/IB2005/002004
(87) International publication number: WO 2006/011016

(56) References cited:
- DE-C- 844 569
- GB-A- 520 686
- US-A- 4 437 294
- US-A- 4 684 040
- US-A- 4 870 808

## Description

### Technical Field

This invention relates to a dosing device for feeding an infusion product.

In particular, this invention can be advantageously used for measured feeding of an infusion product such as tea, coffee, camomile or the like to an automatic machine for making infusion packets, which the present specification expressly refers to but without restricting the scope of the invention.

### Background Art

Usually, an automatic machine for making infusion packets such as filter bags, sachets, filter-paper pods, etc. comprises a plurality of stations located one after the other along a production line forming part of the automatic machine itself, and including, in particular, a feed station for placing measured quantities or doses of infusion product on a web of filter material used to make the packets.

A station for feeding the infusion product is known from United States patent No.4,870,808, which describes a volumetric dosing unit of the type comprising a drum which rotates about a horizontal axis and which is positioned above the web of filter material advancing in a given direction of feed transversal to said axis of rotation.

Above the drum, there is a hopper that feeds the infusion product into uniformly spaced, open cylindrical cells extending radially into the drum. Inside each cell, there is a piston that slides axially in the cylindrical cell itself.

In the device described in the United States patent, each drum piston is driven by an eccentric cam mechanism including a cam inside the drum associated with a cam follower. The cam follower is positioned on one side of the piston, that is to say, it is offset with respect to the piston so as to enable the piston to move up and down in the cylindrical cell.

In other words, the cam, which is preferably divided into two separate, arc-shaped parts, drives the piston from a bottom dead centre (first cam part) approximately corresponding to the point where the product dose is discharged onto the web of filter material, to a top dead centre (second cam part) corresponding to the position where the product is received and dosed.

The second cam part is adjustable from the outside of the drum through suitable adjusters enabling the top dead centre of the piston to be located at a different position so as to vary the volume of product inside the dosing cells.

The unit described above has proved effective and accurate and has made it possible to significantly increase the working speeds of modern automatic machinery for the packaging of infusion products.

Recent tests have shown, however, that if the infusion product is mixed with additives or herbs, such as powdered sugar or flavouring substances, the dosing unit has considerable problems and the pistons frequently get jammed inside the cylindrical dosing cells. Jamming is mainly the result of the offset arrangement of the components acting on each piston.

If the product being dosed has inherent lubricating properties, any product that escapes past the edges of the piston does not cause problems for the sliding motion of the piston. On the other hand, products with additives, sugar or flavourings may, in time, adhere to the sides of the cell in which the piston slides, forming a layer that (however thin) increases the friction between the piston and the cell and leads to jamming.

Indeed, the constantly increasing friction eventually blocks the axial movement of the piston, bringing the packaging machine to a stop and making it necessary to dismantle the drum in order to clean it or to change it entirely. This means prolonged down times and the need to have a spare drum in stock at all times, with all the additional costs that this involves.

The aim of this invention is to provide a dosing device that overcomes the disadvantages described above.

In particular, it is an aim of this invention to provide a high-performance, high-output infusion product dosing device offering maximum dosing precision and operating reliability independently of the type of product to be dosed.

### Disclosure of the Invention

Accordingly, the present invention provides a dosing device for feeding an infusion product having the features of one or more of the appended claims.

### Brief Description of the Drawings

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a schematic front view, partly in cross section and with some parts cut away for clarity, of a preferred embodiment of the dosing device according to the invention;
- Figure 2 illustrates the dosing device of Figure 1 in a schematic front view showing the actuating means of the dosing device;
- Figure 3 is a lateral cross section through line III-III of the dosing device of Figure 1; and
- Figure 4 is a top plan view, with some parts in cross-section and others cut away, of a detail from Figure 3, showing the crank mechanism of the dosing device according to the invention.

### Detailed Description of the Preferred Embodiments of the Inventions

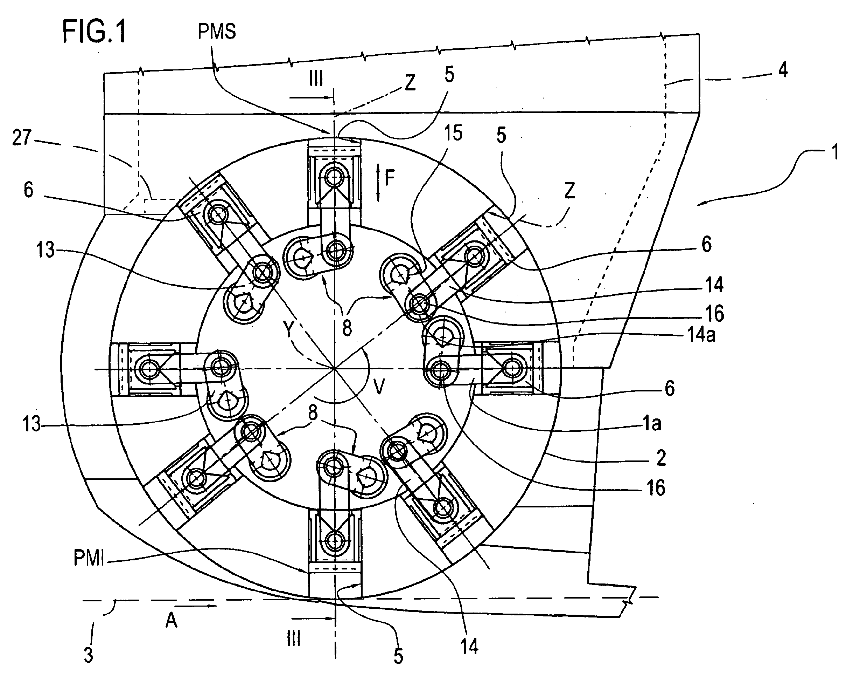

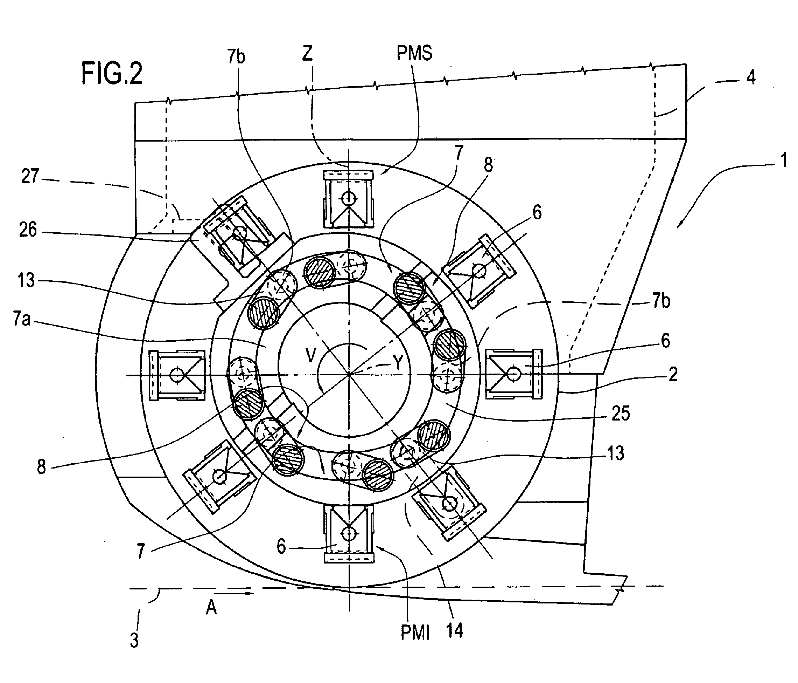

With reference to Figures 1 and 2, the dosing device according to the invention, labelled 1 in its entirety, is used for feeding an infusion product (tea, coffee, camomile, etc.) to an automatic machine (of known type and therefore not illustrated) which is designed to make packets containing the infusion product and of which the dosing device forms an integral part.

The device 1 comprises a first drum 2 that rotates about a horizontal axis Y in an anticlockwise direction V in Figures 1 and 2, the first drum 2 being positioned between a web 3 of filter paper advancing tangentially at the bottom of it and an infusion product feed hopper 4 at the top of it.

In Figures 1 and 2, the web 3 of filter paper is drawn with a dashed line and is advanced continuously in a horizontal feed direction A.

As illustrated in Figures 1, 2 and 3, the first drum 2 has, on its lateral cylindrical surface, a plurality of radial cells 5 for containing the infusion product and within which respective dosing pistons 6 slide axially (arrow F), driven by respective actuating cam means 7 acting on each piston 6.

More specifically, the cam means 7 move the pistons 6 between two end positions (shown in Figures 1 and 2), one of which corresponds to a top dead centre PMS where the dosing cell 5 faces the hopper 4, and in particular, a levelling blade 27, in order to receive a quantity of the infusion product, and the other corresponds to a bottom dead centre PMI where the dosing cell 5 faces the web 3 of filter material in order to discharge the quantity of infusion product onto the web 3 of filter material.

Again with reference to Figures 1 and 2, the cam means 7 comprise, for each piston 6, at least one circular cam track 7a in which a cam follower 7b runs.

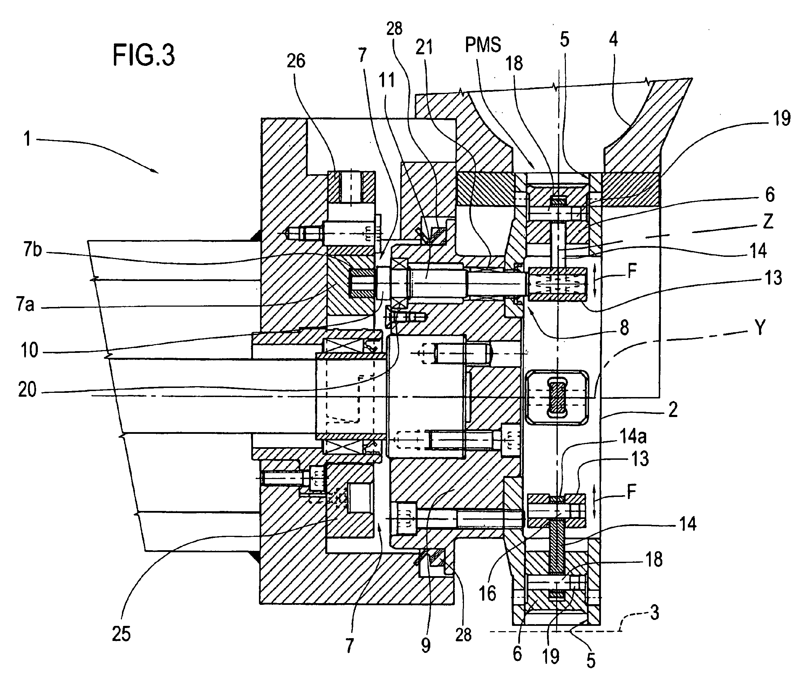

More specifically, the cam track 7a consists of two separate, substantially semicircular segments 7a, 25 which enable the pistons 6 to move in the manner described above: the segment 25 (Figures 2 and 3) is fixed and enables each piston 6 to discharge the dose onto the web 3; the segment 7a, on the other hand, is adjustable by suitable means 26 that protrude from the first drum 2 in order to adjust the distance, within a predetermined range, between the piston 6 and the outside surface of the first drum 2 so as to vary the quantity of infusion product that is placed in the respective dosing cell 5.

The infusion product dose is then levelled off by the levelling blade 27 which consists of an arc-shaped plate positioned on the path of the first drum 2.

As shown in Figure 3, between the cam means 7 and each piston 6 there is a crank mechanism 8 designed to act coaxially on the piston 6 in such a way as to permit the reciprocating motion of the piston 6 itself along the axis Z of the cell 6, in a direction always perfectly aligned with the axis Z.

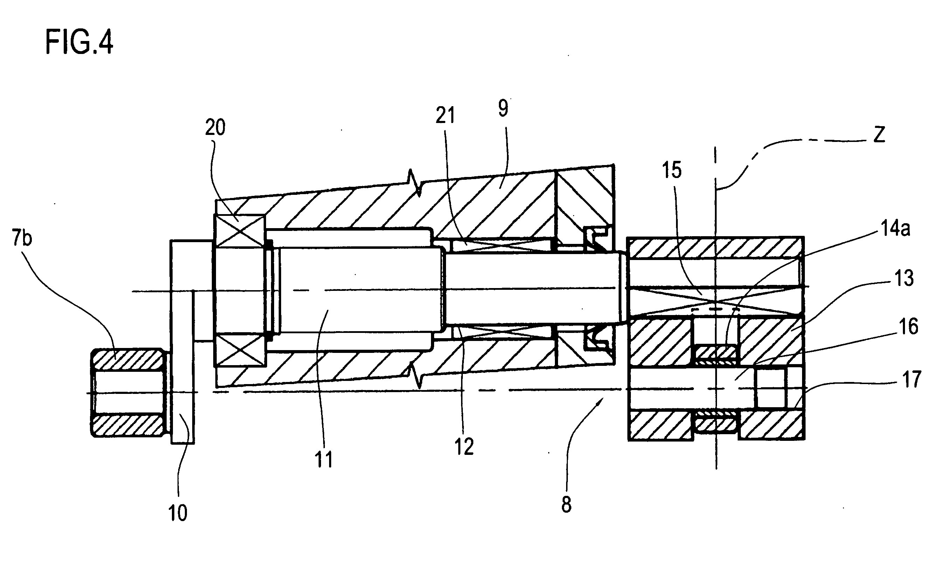

As illustrated in Figures 3 and 4, the crank mechanism 8 is rotatably mounted on a second drum 9, which is associated with the first drum 2, being mounted inside the first drum 2, and sealed off from the first drum 2 by interposed sealing means 28, and which rotates as one with the drum 2 about the aforementioned horizontal axis Y.

Looking in more detail, each crank mechanism 8 comprises a first crank 10 connected at one end to the cam follower 7b and, at the other end, to a transmission shaft 11 that is rotatably supported in a respective hole 12 passing through the second drum 9.

The shaft 11 is rigidly attached at the opposite, free end which protrudes from the second drum 9, to a first end of a second crank 13.

The second crank 13 is in turn connected at its other end to a first end 14a of a connecting control rod 14 connected along the axis Z of the cell 5, and, at its other end, to the piston 6: this creates a mechanism much like a crankshaft and, as shown in Figure 3, makes it possible to apply a pushing and pulling action centrally on the piston 6.

Looking more closely at the technical details, the first end of the second crank 13 is rigidly attached to the shaft 11 by a key 15 in such a way that motion between the cam follower 7b and the piston can be transmitted directly and correctly.

As clearly illustrated in Figure 4, the end of the crank 13 that is linked to the connecting rod 14 is fork-shaped so as to hold the end of the connecting rod 14 on both sides, thus obtaining a correct axial movement along the respective cell 5.

The connecting rod 14 is coupled with the second crank 13 through a first pin 16 that passes through a respective hole 17 made in the forked end of the second crank 13 itself.

At the other end, the connecting rod 14 is linked to the piston 6 by a second, transversal pin 18 which is housed in a respective hole 19 made in the piston 6 and which engages the respective end of the connecting rod 14.

To enable the motion of the cam follower 7b to be transmitted correctly to the piston 6, each transmission shaft 11 has two bearings 20 and 21 positioned between the shaft 11 itself and the hole 12 in the second drum 9 in such a way as to rotate the entire crank drive mechanism for the piston 6.

The operation of the dosing device 1 may be easily inferred from the above description with reference to the accompanying drawings and will not therefore be described in further detail.

The dosing device structured as described above therefore achieves the aforementioned aims thanks to the application of a crank mechanism which enables each piston to be driven in a precise axial direction in such a way as to obtain a correct and reliable movement at all times, irrespective of the type of product being dosed.

The application of this crank mechanism does not affect the overall dimensions of the device since the working parts for transmitting drive to the pistons remain unchanged.

The compactness of the crank and connecting rod assembly also permits an extremely precise and fast up and down driving action on the pistons, keeping each piston parallel to the respective dosing cell in which it slides in a direction that is at all times exactly aligned with the longitudinal axis of the cell itself, thus preventing the pistons from seizing up during normal operation.

The provision of a second drum mounted inside the first drum and sealed off from the latter isolates the drive mechanisms and makes it possible to keep them clean. It also slightly increases the total thickness of the dosing unit and allows the above mentioned actuating cam means to be positioned in a more convenient area, with a more compact cam control which, in practice, reduces the overall dimensions compared to the prior art device, where the control mechanism protrudes from the first drum and is further away from the cam.

The invention described can be modified and adapted in several ways within the scope of the claims.

## Claims

1. A dosing device (1) for feeding an infusion product comprising a rotary drum type conveyor means (2) positioned between a web (3) of filter material and a hopper (4) for containing the infusion product; the drum type conveyor means (2) having a plurality of radial cells (5) made in them for containing the infusion product and in which there slide piston type dosing means (6); each dosing piston (6) being driven axially by respective eccentric cam actuating means (7) between two end positions, one of which corresponds to a top dead centre (PMS) where each dosing cell (5) faces the hopper (4) in order to receive a quantity of the infusion product, and the other corresponds to a bottom dead centre (PMI) where the dosing cell (5) faces the web (3) of filter material in order to discharge the quantity of infusion product onto the web (3) of filter material; the device being **characterised in that** between the actuating means (7) and each piston (6) there are crank mechanisms (8) designed to act coaxially on the piston (6) in such a way as to enable the piston (6) to move in a direction that is perfectly aligned with a longitudinal axis (Z) of the respective dosing cell (5), the eccentric cam actuating means (7) comprising at least one cam track (7a) in which there runs a cam follower (7b) for each piston (6); the crank mechanisms (8) comprising a first crank (10) connected at one end to the cam follower (7b) and, at the other end, to a transmission shaft (11); the transmission shaft (11) being rigidly attached to a first end of a second crank (13) that is in turn connected at its other end to a first end (14a) of a connecting control rod (14); the connecting rod (14) being linked to the piston (6).

2. The device according to claim 1, **characterised in that** a first end of the second crank (13) is rigidly attached to the shaft (11) in such a way as to enable transmission of motion between the cam follower (7b) and the piston (6).

3. The device according to claim 1 or 2, **characterised in that** the end of the second crank (13) that is linked to the connecting rod (14) is fork-shaped so as to hold the end of the connecting rod (14) on both sides; the connecting rod (14) being coupled with the second crank (13) through a first pin (16) that passes through a respective hole (17) made in said forked end.

4. The device according to claim 3, **characterised in that** the connecting rod (14) is linked to the piston (6) by a second, transversal pin (18) which is housed in a respective hole (19) made in the piston (6) and which engages the respective end of the connecting rod (14).

## Patentansprüche

1. Dosiervorrichtung (1) zum Zuführen eines Aufgussproduktes, enthaltend ein drehtrommelartiges Fördermittel (2), positioniert zwischen einer Bahn (3) aus Filtermaterial und einem Trichter (4) zur Aufnahme des Aufgussproduktes; wobei das trommelartige Fördermittel (2) eine Anzahl von radialen Zellen (5) aufweist, eingearbeitet in dieses zur Aufnahme des Aufgussproduktes, und in welchen kolbenartige Dosiermittel (6) gleiten; wobei jeder Dosierkolben (6) axial durch jeweilige Exzenternocken-Antriebsmittel (7) zwischen zwei Endpositionen betätigt wird, von welchen die eine einem oberen Totpunkt (PMS) entspricht, an welchem jede Dosierzelle (5) dem Trichter (4) zugewandt ist, um eine Menge des Aufgussproduktes zu übernehmen, und die andere einem unteren Totpunkt (PMI), an welchem die Dosierzelle (5) der Bahn (3) aus Filtermaterial zugewandt ist, um die Menge des Aufgussproduktes auf die Bahn (3) aus Filtermaterial abzugeben; wobei die Vorrichtung **dadurch gekennzeichnet ist, dass** zwischen den Antriebsmitteln (7) und jedem Kolben (6) Kurbelmechanismen (8) vorhanden sind, dazu bestimmt, koaxial auf solche Weise auf den Kolben (6) zu wirken, dass der Kolben (6) in einer Richtung bewegt werden kann, die perfekt zu der Längsachse (Z) der jeweiligen Dosierzelle (5) ausgerichtet ist, wobei die Exzenternocken-Antriebsmittel (7) wenigstens eine Nockenbahn (7a) enthalten, in welcher ein Nockenstössel (7b) für jeden Kolben (6) läuft; wobei die Kurbelmechanismen (8) wenigstens eine erste Kurbel (10) enthalten, angeschlossen mit einem Ende an den Nockenstössel (7b), und mit dem anderen Ende an eine Transmissionswelle (11); wobei die Transmissionswelle (11) starr an ein erstes Ende einer zweiten Kurbel (13) angeschlossen ist, die wiederum mit ihren anderen Ende an ein erstes Ende (14a) einer Pleuelstange (14) angeschlossen ist; und wobei die Pleuelstange (14) an dem Kolben (6) befestigt ist.

2. Vorrichtung nach Patentanspruch 1, **dadurch gekennzeichnet, dass** das erste Ende der zweiten Kurbel (13) starr an die Welle (11) auf solche Weise angeschlossen ist, dass die Übertragung der Bewegung zwischen dem Nockenstössel (7b) und dem Kolben (6) erlaubt wird.

3. Vorrichtung nach Patentanspruch 1 oder 2, **dadurch gekennzeichnet, dass** das Ende der zweiten Kurbel (13), welches an die Pleuelstange (14) angeschlossen ist, gabelförmig ist, so dass das Ende der Pleuelstange (14) auf beiden Seiten gehalten wird; wobei die Pleuelstange (14) mit der zweiten Kurbel (13) durch einen ersten Zapfen (16) verbunden ist, der durch eine jeweilige, in das genannte gabelförmige Ende eingearbeitete Bohrung (17) geht.

4. Vorrichtung nach Patentanspruch 3, **dadurch gekennzeichnet, dass** die Pleuelstange (14) an den Kolben (6) durch einen zweiten, querverlaufenden Zapfen (18) angeschlossen ist, welcher in einer jeweiligen, in den Kolben (6) eingearbeiteten Bohrung (19) liegt, und welcher in das jeweilige Ende der Pleuelstange (14) greift.

## Revendications

1. Un dispositif de dosage (1) pour alimenter un produit à infuser, comprenant des moyens transporteurs du type à tambour rotatif (2) positionnés entre une bande (3) de matériau filtrant et une trémie (4) destinée à contenir le produit à infuser ; les moyens transporteurs à tambour (2) présentant une pluralité de cavités (5), radiales, destinées à contenir le produit à infuser et dans lesquelles coulissent des moyens de dosage du type à piston (6) ; chaque piston de dosage (6) étant mû axialement par des moyens respectifs d'actionnement à came excentrique (7) entre deux positions limites, dont une position correspond à un point mort haut (PMS) où chaque cavité de dosage (5) est en face de la trémie (4) pour recevoir une quantité dosée du produit à infuser, et l'autre position correspond à un point mort bas (PMI) où la cavité de dosage (5) est en face de la bande (3) de matériau filtrant pour déposer la quantité dosée de produit à infuser sur cette même bande (3) de matériau filtrant ; le dispositif étant **caractérisé en ce qu'**il y a, entre les moyens d'actionnement (7) et chaque piston (6), des mécanismes de manivelle (8) destinés à agir coaxialement sur le piston (6) de manière à permettre audit piston (6) de se mouvoir dans une direction qui est parfaitement alignée avec un axe longitudinal (Z) de la cavité de dosage (5) respective, les moyens d'actionnement à came excentrique (7) comprenant au moins une piste de came (7a) dans laquelle coulisse un galet suiveur de came (7b) pour chaque piston (6) ; les mécanismes de manivelle (8) comprenant une première manivelle (10) associée, à une extrémité, au galet suiveur de came (7b) et, à l'autre extrémité, à un arbre de transmission (11); l'arbre de transmission (11) étant associé de façon rigide à une première extrémité d'une deuxième manivelle (13) qui est à son tour associée, au niveau de son autre extrémité, à une première extrémité (14a) d'une bielle (14) de commande ; la bielle (14) étant associée au piston (6).

2. Le dispositif selon la revendication 1, **caractérisé en ce qu'**une première extrémité de la deuxième manivelle (13) est associée de façon rigide à l'arbre (11) de manière à permettre la transmission de mouvement entre le galet suiveur de came (7b) et le piston (6).

3. Le dispositif selon la revendication 1 ou 2, **caractérisé en ce que** l'extrémité de la deuxième manivelle (13) qui est associée à la bielle (14) a la forme d'une fourche, de manière à retenir des deux côtés l'extrémité de la bielle (14) elle-même; la bielle (14) étant accouplée avec la deuxième manivelle (13) par l'intermédiaire d'une première broche (16) qui passe à travers un trou (17) respectif réalisé dans ladite extrémité en fourche.

4. Le dispositif selon la revendication 3, **caractérisé en ce que** la bielle (14) est associée au piston (6) par l'intermédiaire d'une deuxième broche (18), transversale, qui est logée dans un trou (19) respectif réalisé dans le piston (6) et qui assujettit l'extrémité respective de la bielle (14).
